# NEUE EUROPÄISCHE PATENTSCHRIFT

(11) **EP 0 466 744 B2**
(45) Veröffentlichungstag und Bekanntmachung des Hinweises auf die Entscheidung über den Einspruch: **10.04.1996**
(45) Hinweis auf die Patenterteilung: 14.07.1993
(21) Anmeldenummer: 90905460.3
(22) Anmeldetag: 31.03.1990
(51) Int. Cl.: B01D 17/022, C07C 67/00

(54) **VERFAHREN ZUR ABTRENNUNG VON GLYZERIN MIT EINEM FASERBETT ALS KOALESZENZHILFE**
PROCESS FOR SEPARATING GLYCERINE USING A FIBRE BED AS AN AID TO COALESCENCE
PROCEDE POUR SEPARER GLYCERINE EN UTILISANT EN TANT QU'ADJUVANT DE COALESCENCE UN LIT DE FIBRES

(30) Priorität: 08.04.1989 DE 3911538
(43) Veröffentlichungstag der Anmeldung: 22.01.1992
(73) Patentinhaber: Henkel Kommanditgesellschaft auf Aktien, D-40191 Düsseldorf (DE)
(72) Erfinder: ASSMANN, Georg, D-4053 Jüchen (DE); GUTSCHE, Bernhard, D-4010 Hilden (DE); JOHANNISBAUER, Wilhelm, D-4006 Erkrath 1 (DE); RIDINGER, Richard, D-4000 Düsseldorf (DE); RIGAL, Jean Route de Cassagne, F-31360 Saint-Martory (FR); ARMENGAUD, René Chemin du Guignon, F-31360 Saint-Martory (FR); CORMARY, Bernard Villa Nougue, F-31260 Salies-du-Salat (FR)
(86) Internationale Anmeldenummer: EP9000514
(87) Internationale Veröffentlichungsnummer: WO9011810

(56) Entgegenhaltungen:
- EP-A- 0 198 243
- DE-A- 2 546 043
- DE-A- 3 020 612
- DE-A- 3 107 318
- US-A- 4 058 456
- FRAM - Filtration und Phasentrennung, Bericht über einen Vortrag vom 07/06/1966
- FRIEDRICH REBELEIN"Ein Beitrag zur Tropfenabscheidung aus Flüssigkeiten mit Hilfe von Faserabscheidern", Dissertation (Technische Universität München) 16/02/1989

## Beschreibung

Die Erfindung betrifft ein Verfahren gemäß Oberbegriff des Anspruchs 1.

Hier und im folgenden bedeuten die Begriffe "Flüssigkeit" die gesamte Flüssigkeit vor der Abtrennung und der Begriff "Restflüssigkeit" die Flüssigkeit nach dem Abtrennen des Glyzerins.

Es tritt oft das Problem auf, zwei nicht vollständig miteinander mischbare organische Flüssigkeiten voneinander zu separieren. Die beiden Flüssigkeiten werden durch Pumpen, Rohre und Apparate so stark verwirbelt und vermischt, daß die eine Flüssigkeit feindispers verteilt in der anderen vorliegt. Zum Trennen beider Flüssigkeiten kann das Sedimentieren von mehr oder weniger großen Tropfen genutzt werden. Dazu werden stehende oder liegende Abscheider eingesetzt. Beim Einsatz statischer Abscheider, z.B. von Dekantern, werden sehr lange Verweilzeiten benötigt, die bis zu 14 Tagen reichen können. Um diese Zeit zu verkürzen, wurde schon vorgeschlagen, den statischen Abscheidern nachgeschaltete Separatoren einzusetzen, z.B. für das nach einer Umesterung anfallende Reaktionsprodukt (DE-Z Seifen-Öle-Fette-Wachse, 114.Jg., 1988, Seite 596, 2. Absatz und Figur 3). Gegen den Einsatz solcher Separatoren sprechen jedoch Betriebsprobleme, die bei Durchsatzschwankungen, bei unterschiedlichen Rohstoffqualitäten und unterschiedlichen Rohstoffen, z.B. Ölsorten mit verschiedenen Kettenlängen, Sättigungsgraden und unterschiedlichen Verunreinigungen, sowie bei schwankenden Temperaturen auftreten. Weitere Nachteile eines solchen Vorschlags sind hohe Investitions-, Instandhaltungs- und Energiekosten.

In einem anderen, aus der DE-A-23 03 990 und GB-A-14 09 045 bekannten Verfahren zum Trennen von Erdöl-Wasser-Gemischen bzw. Kerosin-Wasser-Gemischen wird vor dem Sedimentieren eine Koaleszenzhilfe eingesetzt. Solche Koaleszenzverfahren sind ferner aus DE-A-31 11 554 und DE-A-27 55 837 bekannt. Diese Koaleszenzhilfe kann eine unterschiedliche Form, z.B. in der Gestalt von Drahtnetzen, Fäden oder Fasern haben. Wichtig ist dabei, daß die Oberfläche der Koaleszenzhilfe eine unterschiedliche Benetzbarkeit hinsichtlich der beiden Flüssigkeiten hat. Diese Benetzbarkeit wird durch die Grenzflächenspannung der Flüssigkeit gegenüber der Koaleszenzhilfe bestimmt. Werden solche bekannten Koaleszenzhilfen unter den angegebenen üblichen Arbeitsbedingungen, wie sie zum Abtrennen von Wasser aus organischer Substanz bzw. organischer Substanz aus Wasser bekannt sind, zum Abtrennen einer organischen Flüssigkeit von einer anderen organischen Flüssigkeit eingesetzt, so zeigt es sich, daß die Koaleszenzhilfe besonders beim Einsatz zur Trennung von nicht mischbaren fettchemischen Substanzen keinen Einfluß auf die Koaleszenz der dispergierten organischen Komponente hat.

Der Erfindung liegt die Aufgabe zugrunde, ein Verfahren zu schaffen, durch das die bisher benötigte Verweilzeit erheblich reduziert wird.

Diese Aufgabe wird erfindungsgemäß mit den kennzeichnenden Merkmalen des Anspruchs 1 gelöst.

Überraschenderweise zeigte es sich nämlich, daß bei einem Einsatz von Faserfiltern als Koaleszenzhilfe und beim Einhalten enger Arbeitsbereiche eine Koaleszenz der dispergierten Tropfen des Glyzerins eintritt. Wesentlich für den Erfolg ist dabei die Wahl der Strömungsgeschwindigkeit in Abhängigkeit von den Grenzflächenspannungen mit dem Faserbett und zwischen den Flüssigkeiten. Die erforderlichen Strömungsgeschwindigkeiten liegen bei der vorliegenden Erfindung erheblich niedriger als bei den bekannten Koaleszenzverfahren. Bei solchen, in der vorliegenden Erfindung verwendeteten Strömungsgeschwindigkeiten wird z.B. in der DE-A-23 03 990 von einem fehlenden Einfluß der Koaleszenzhilfe gesprochen. Gerade diese Geschwindigkeiten führen jedoch bei der Abtrennung des Glyzerins von der restlichen organischen Flüssigkeit zum Erfolg.

Besonders bewährt hat sich das erfindungsgemäße Verfahren beim Abtrennen des Glycerins von Fettsäurealkylester-Glycerin-Gemischen, insbesondere von einem Fettsäuremethylester-Glycerin-Gemisch.

In der vorliegenden Erfindung haften die dispergierten Tröpfchen des Glyzerins an den einzelnen Fasern. Während die Flüssigkeit an den Fasern vorbeiströmt, wachsen die darin dispergierten weiteren Tröpfchen durch Koaleszenz an den Fasern an. Die größer gewordenen Tropfen setzen der strömenden Flüssigkeit einen größeren Widerstand entgegen und wandern daher entlang der Fasern an die letzte Faserschicht. Erreichen die Tropfen eine bestimmte Mindestgröße, so werden sie von dieser letzten Faserschicht durch nachfolgende Tropfen verdrängt und von der Hauptphasenströmung mitgerissen. Diese großen Tropfen sedimentieren im nachgeschalteten Abscheider aufgrund ihres größeren Durchmessers erheblich schneller als ohne Einsatz des Faserfilters. Hinter dem Abscheider lassen sich die beiden Flüssigkeiten, Glyzerin und die Restflüssigkeit, kontinuierlich abziehen.

Die Flüssigkeiten des vorliegenden Verfahrens im Vergleich zum Stand der Technik führen zu völlig anderen Arbeitsbedingungen. Daher wird vorgeschlagen, daß die Geschwindigkeit der Strömung durch das Faserbett zwischen 0,1 und 3,0 mm/s, vorzugsweise zwischen 0,2 und 1,0 mm/s liegt. Solche Strömungsgeschwindigkeiten sind für die Trennung von Wasser und Öl ungewöhnlich, wie die DE-A-23 03 990 (Tabelle 1 auf Seite 6 und Seite 15, 1.Absatz) zeigt. Bei dem bekannten Verfahren liegen die Strömungsgeschwindigkeiten um 10 mm/s. In diesem Stand der Technik bedeuten Geschwindigkeiten um 0,5 mm/s, daß das Koaleszenzhilfsmittel auf die Flüssigkeit praktisch keinen Einfluß hat. Gerade in diesem Geschwindigkeitsbereich arbeitet jedoch die vorliegende Erfindung.

Es wird die Temperatur der Flüssigkeit innerhalb ihres Fließfähigkeitsbereichs so gewählt, daß die Löslichkeit der abzutrennenden Komponente minimal ist. Dies sind im allgemeinen möglichst niedrige Temperaturen. Dabei muß sichergestellt sein, daß die Flüssigkeit über den gesamten Bereich des Faserfilters noch fließfähig ist.

Ferner wird ein ungeordnete Fasern enthaltendes Faserbett vorgeschlagen, da es erheblich wirtschaftlicher als ein Faserbett mit geordneten Fasern ist und dennoch praktisch genausogut funktioniert.

Weiterhin wird vorgeschlagen, daß der Durchmesser der Fasern des Faserbetts zwischen 1 und 50 µm, vorzugsweise zwischen 1 und 5 µm liegt. In diesem Bereich wurde eine besonders gute Koaleszenz der dispergierten flüssigen organischen Komponente erreicht.

Auch ist eine Packungsdichte des Faserbettes, die zwischen 3 und 100 mm in Strömungsrichtung liegt, vorteilhaft.

Besonders wirtschaftlich wird das Verfahren durchgeführt, wenn es erst nach einem statischen Abtrennen in einer üblichen Abscheideeinheit (Dekanter) zum groben Abscheiden des Glyzerins durchgeführt wird. Durch eine solche schnelle und billige Vorabtrennung läßt sich z.B. ein Gehalt von Glyzerin in Fettsäuremethylester von etwa 10 - 15 Prozent auf ungefähr 1 Prozent senken, ohne daß ein größerer Aufwand nötig ist. Der verbleibende Anteil von etwa 1 Prozent bis nahe der Löslichkeitsgrenze (ca 0,1 Prozent) läßt sich dann mit Hilfe des Faserfilters und des Sedimentationsabscheiders abtrennen.

Die auf die Koaleszenz folgende Sedimentation läßt sich in dieser Erfindung in einer üblichen Abscheidereinheit und auch in allen sonstigen Abscheidern erreichen. Z.B. können dazu stehende oder liegende Abscheider benutzt werden.

Besonders wichtig in dieser Erfindung ist das Einhalten eines Temperaturbereichs, und zwar zumeist einer besonders niedrigen Temperatur. Diese Arbeitstemperatur ist jedoch begrenzt durch die Erstarrungstemperatur der flüssigen Bestandteile und durch die Temperaturabhängigkeit des Löslichkeitsverhaltens. Dabei wird die Temperatur so gewählt, daß die Löslichkeit der Restkomponente in der Flüssigkeit besonders niedrig ist.

Im folgenden wird die Erfindung anhand eines Beispiels unter Bezugnahme auf die einzige Figur näher erläutert.

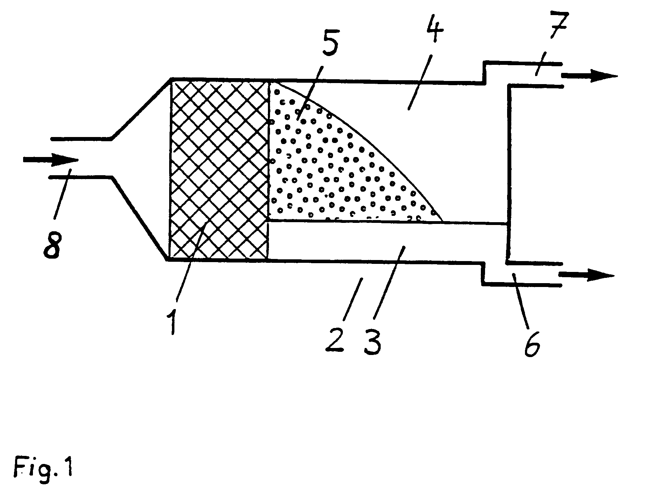

Figur 1 zeigt den schematischen Aufbau eines Abscheiders mit vorgeschaltetem Faserfilter.

Von links strömt ein Gemisch aus Methylester und Glyzerin in den Abscheider ein. Das schwerere Glyzerin liegt in der Restflüssigkeit Methylester feindispergiert in Form von kleinen Tröpfchen vor. In diesem Beispiel enthält die Flüssigkeit 1,5 Prozent Glyzerin, die abzutrennende flüssige organische Komponente. Ohne den Einsatz eines Faserfilters würde sich im statisch stehenden Abscheider das Glyzerin erst nach Tagen in einer unteren schweren Phase sammeln. Im vorliegenden Beispiel strömt die Flüssigkeit zunächst durch ein Faserbett (1), das aus einer in einer Patrone angeordneten Glasfaserschicht besteht. Diese Fasern haben einen Durchmesser von 1 µm, in einem anderen Beispiel von 5 µm. Das Faserbett hat eine Querschnittsfläche von 0,5 m².

Die Flüssigkeit, das Gemisch aus Methylester und Glyzerin mit typischen Komponenten aus der Umesterungsaktion wie z.B. Seifen, strömt bei einer Arbeitstemperatur von 20 bis 40 °C mit einer Geschwindigkeit von 0,3 mm/s durch die Patrone mit dem Faserbett (1). Die aus dem Faserbett (1) austretenden Glyzerintropfen sedimentieren im Bereich (5) nach unten. Die Phase des Fettsäuremethylesters (4), die Restflüssigkeit, hat hinter dem Faserbett (1) im Sedimentationsbereich eine Strömungsgeschwindigkeit von 1 - 3 mm/s. Bei Temperaturen von 20 °C konnte das Glyzerin bis auf einen Anteil von 0,1 Pro zent aus dem Fettsäuremethylester abgetrennt werden. Die genaue optimale Temperatur hängt jedoch ab von der Methylestersorte und den zusätzlichen Komponenten und kann durch Versuche bestimmt werden.

Die untere, schwerere Glyzerinphase (3) wird über den Auslaß (6), die obere, leichtere Restflüssigkeit (4), der Fettsäuremethylester, wird über den Auslaß (7) abgezogen. Die Pfeile geben die Strömungsrichtung an.

### Bezugszeichenliste

(1) Faserbett
(2) Abscheider
(3) Glycerinphase
(4) Restflüssigkeit; Fettsäuremethylester
(5) Bereich
(6) Auslaß
(7) Auslaß
(8) Einlaß

## Patentansprüche

1. Verfahren zur Abtrennung von in einer hauptsächlich fettchemische Substanzen enthaltenden Flüssigkeit dispergiertem Glycerin, indem das Glycerin durch Sedimentation abgeschieden wird, wobei das Glycerin und die Restflüssigkeit einen Dichteunterschied aufweisen,
**dadurch gekennzeichnet**,
daß die Flüssigkeit vor der Sedimentation durch ein unbehandelte Glasfasern enthaltendes Faserbett (1) strömt, daß das Glycerin und die Restflüssigkeit unterschiedliche Grenzflächenspannungen gegenüber dem Faserbett (1) aufweisen, daß die Flüssigkeit eine derartige Temperatur und eine derartige Konzentration an Glycerin aufweist, so daß sich im Gleichgewicht mindestens zwei flüssige Phasen ausbilden, und daß die Geschwindigkeit der Strömung durch das Faserbett (1) zwischen 0,1 und 3,0 mm/s, vorzugsweise zwischen 0,2 und 1,0 mm/s liegt.

2. Verfahren nach Anspruch 1,
**dadurch gekennzeichnet**,
daß Glycerin von einem Fettsäurealkylester-Glycerin-Gemisch, insbesondere von einem Fettsäuremethylester-Glycerin-Gemisch abgetrennt wird.

3. Verfahren nach Anspruch 1 oder 2,
**dadurch gekennzeichnet**,
daß die Temperatur der Flüssigkeit innerhalb ihres Fließfähigkeitsbereichs so gewählt wird, daß die Löslichkeit der abzutrennenden Komponente minimal ist.

4. Verfahren nach einem der Ansprüche 1 bis 3,
**gekennzeichnet durch**
ein ungeordnete Fasern enthaltendes Faserbett (1).

5. Verfahren nach einem der Ansprüche 1 bis 4,
**dadurch gekennzeichnet**,
daß der Durchmesser der Fasern des Faserbetts (1) zwischen 1 und 50 Mikrometern, vorzugsweise zwischen 1 und 5 µm, liegt.

6. Verfahren nach einem der Ansprüche 1 bis 5,
**gekennzeichnet durch**
eine Packungsdichte des Faserbetts (1) zwischen 3 und 100 mm in Strömungsrichtung.

## Claims

1. A process for the separation of glycerol dispersed in a liquid containing mainly oleochemical substances, wherein the glycerol and the residual liquid have a density difference, by removing the glycerol by sedimentation,
characterized in that
the liquid before the sedimentation flows through a fibre bed (1) containing untreated glass fibres, that the glycerol and the residual liquid have different interfacial tensions with respect to the fibre bed (1), that the liquid has such a temperature and such a glycerol concentration that at least two phases form in equilibrium and that the flow rate through the fibre bed (1) is between 0.1 and 3.0 mm/s, preferably between 0.2 and 1.0 mm/s.

2. A process according to Claim 1,
characterized in that
the glycerol is separated from a mixture of fatty acid alkyl ester and glycerol, particularly from a mixture of fatty acid methyl ester and glycerol.

3. A process according to Claim 1 or 2,
characterized in that
the temperature of the liquid is selected within its fluidity range so that the solubility of the component to be separated is minimal.

4. A process according to one of Claims 1 to 3,
characterized by
a fibre bed (1) containing disordered fibres.

5. A process according to one of Claims 1 to 4,
characterized in that
the diameter of the fibres of the fibre bed (1) is between 1 and 50 micrometers, preferably between 1 and 5 µm.

6. A process according to one of Claims 1 to 5,
characterized by
a packing density of the fibre bed (1) of between 3 and 100 mm in the direction of flow.

## Revendications

1. Procédé de séparation de glycérine dispersée dans un liquide contenant essentiellement des substances chimiques grasses, où la glycérine est séparée par sédimentation, la glycérine et le liquide résiduel présentant une différence de densité, caractérisé en ce que le liquide traverse avant la sédimentation un lit de fibres (1) contenant des fibres non traitées, en ce que la glycérine et le liquide résiduel présentent des tensions interfaciales différentes par rapport au lit de fibres (1), en ce que le liquide présente une température et une concentration en glycérine telles que deux phases liquides au moins se forment à l'équilibre et en ce que la vitesse d'écoulement par le lit de fibres (1) est comprise entre 0,1 et 3,0 mm/s de préférence entre 0,2 et 1,0 mm/s.

2. Procédé selon la revendication 3, caractérisé en ce que la glycérine est séparée d'un mélange glycérine-alkylester d'acide gras, en particulier d'un mélange glycérine-ester méthylique d'acide gras.

3. Procédé selon une des revendications 1 ou 2, caractérisé en ce que la température du liquide est choisie dans sa gamme de fluidité de sorte que la solubilité du composant à séparer soit minimale.

4. Procédé selon une des revendications 1 à 3, caractérisé par un lit de fibres (1) contenant des fibres désordonnées.

5. Procédé selon une des revendications 1 à 4, caractérisé en ce que le diamètre des fibres du lit de fibres (1) est compris entre 1 et 50 µm, de préférence entre 1 et 5 µm.

6. Procédé selon une des revendications 1 à 5, caractérisé par une densité de tassement du lit de fibres (1) comprise entre 3 et 100mm dans le sens d'écoulement.
